(19) 

Europäisches
Patentamt
European
Patent Office
Office européen
des brevets

(11) **EP 4 510 433 A1**

(12) **EUROPEAN PATENT APPLICATION**

(43) Date of publication:
**19.02.2025  Bulletin 2025/08**

(21) Application number: **24193654.1**

(22) Date of filing: **08.08.2024**

(51) International Patent Classification (IPC):
**H02M 1/00** $^{(2006.01)}$   **H02M 3/158** $^{(2006.01)}$
**H02M 7/5387** $^{(2007.01)}$

(52) Cooperative Patent Classification (CPC):
**H02M 1/0009; H02M 3/158; H02M 7/53871**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.08.2023   JP 2023132068**

(71) Applicant: **DIAMOND&ZEBRA ELECTRIC MFG.
CO., LTD.
Osaka 532-0026 (JP)**

(72) Inventor: **KISHIMOTO, Keisuke
Osaka 532-0026 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **POWER CONVERSION DEVICE, POWER CONVERSION METHOD AND COMPUTER
PROGRAM**

(57)      A power conversion device (6) comprises: a voltage conversion circuit (61) having a switching element; a control circuit (60) performing switching control of the voltage conversion circuit (61); and a current detection circuit (63) detecting current output from the voltage conversion circuit (61), and the control circuit (60) calculates an average value of current output from the voltage conversion circuit (61) based on a first current value detected in a first switching state where output of current increases, a second current value detected in a second switching state where output of current decreases and a modulation ratio related to switching control of voltage conversion, and controls operation of the voltage conversion circuit (61) based on a calculated average value.

FIG.1

EP 4 510 433 A1

**Description**

[Technical Field]

The present disclosure relates to a power conversion device, a power conversion method and a computer program.

[Background Art]

As emergency power sources during long-term power outages due to disasters and as systems to compensate for power shortages during peak power periods in summer and winter, a solar power generation system and a distributed power supply system, which is configured to interconnect a large-capacity storage battery installed in an electric vehicle, have widely been used.
The distributed power supply system has a power conditioner that converts DC power from a dispersed power source into AC power. The power conditioner performs DC-AC conversion by switching control of an inverter. The power conditioner detects output current at the switching timing of the inverter and calculates an average value of the output current to perform various control (see Patent Documents 1 and 2, for example).

[Prior Art Document]

[Patent Document]

[Patent Document 1] Japanese Patent Application Laid-Open No. S58-190281
[Patent Document 2] Japanese Patent Application Laid-Open No. 2014-060851

[Summary of Invention]

[Problems to be Solved by Invention]

The above-mentioned output average current is, however, affected by measurement errors due to mixing of switching noise and a time error of detection timing, which prevents accurate calculation of output current values.
An object of the present invention is to provide a power conversion device, a power conversion method and a computer program that can suppress the influence of measurement errors due to mixing of switching noise and a time error of detection timing and can calculate the average value of output current values with higher accuracy.

[Means for Solving Problems]

A power conversion device according to one aspect of the resent disclosure comprises: a voltage conversion circuit having a switching element; a control circuit performing switching control of the voltage conversion circuit; and a current detection circuit detecting current output from the voltage conversion circuit, and the control circuit calculates an average value of current output from the voltage conversion circuit based on a first current value detected in a first switching state where output of current increases, a second current value detected in a second switching state where output of current decreases and a modulation ratio related to switching control of voltage conversion, and controls operation of the voltage conversion circuit based on a calculated average value.
A power conversion method according to one aspect of the present disclosure using a voltage conversion circuit having a switching element comprises: performing switching control of the voltage conversion circuit; detecting current output from the voltage conversion circuit; calculating an average value of the current output from the voltage conversion circuit based on a first current value detected in a first switching state where output of current increases, a second current value detected in a second switching state where output of current decreases and a modulation ratio related to switching control of voltage conversion; and controlling operation of the voltage conversion circuit based on a calculated average value.
A computer program according to one aspect of the present disclosure causing a computer to execute processing related to power conversion using a voltage conversion circuit having a switching element of: performing switching control of the voltage conversion circuit; detecting current output from the voltage conversion circuit; calculating an average value of current output from the voltage conversion circuit based on a first current value detected in a first switching state where output of current increases, a second current value detected in a second switching state where output of current decreases and a modulation ratio related to switching control of voltage conversion; and controlling operation of the voltage conversion circuit based on a calculated average value.

[Effect of Invention]

According to the above description, it is possible to suppress the influence of the measurement errors due to the mixing of switching noise and the time error of the detection timing in the power conversion device and calculate the average value of the output current values with higher accuracy.

[Brief Description of Drawings]

FIG. 1 is a block diagram illustrating an example of the configuration of a grid interconnection system according to a first embodiment.
FIG. 2 is a circuit diagram illustrating an inverter and its peripheral circuits.
FIG. 3 is a block diagram illustrating an example of the configuration of a control circuit.
FIG. 4 is a flowchart illustrating a processing procedure of the control circuit.
FIG. 5 is a timing chart illustrating a method of calculating average output current.
FIG. 6 is a timing chart illustrating a method of calculating average output current.
FIG. 7 is a timing chart illustrating a method of calculating average output current.
FIG. 8A illustrates timing charts for depicting a method of calculating average output current according to a second embodiment.
FIG. 8B illustrates timing charts for depicting a method of calculating average output current according to a second embodiment.
FIG. 9A illustrates timing charts for depicting a method of calculating average output current according to a third embodiment.
FIG. 9B illustrates timing charts for depicting a method of calculating average output current according to a third embodiment.

[Mode for Carrying Out Invention]

A power conversion device, a power conversion method and a computer program according to embodiments of the present disclosure will be described below with reference to the drawings. Note that the present disclosure is not limited to these examples. The scope of the present invention is defined by the appended claims, and all changes that fall within the meanings and the bounds of the claims, or equivalence of such meanings and bounds are intended to be embraced by the claims. In other words, embodiments obtained by combining technical means that have been changed appropriately within the scope indicated in the claims are also included in the technical scope of the present invention.

First Embodiment

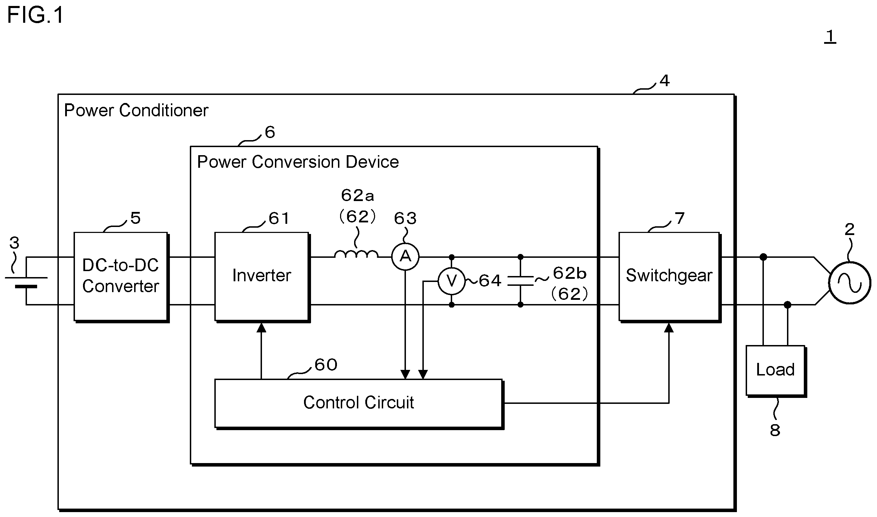

FIG. 1 is a block diagram illustrating an example of the configuration of a grid interconnection system 1 according to the first embodiment. The grid interconnection system 1 includes a power grid 2, a distributed power supply 3 interconnecting the power grid 2 and a power conditioner 4 that is placed between the power grid 2 and the distributed power supply 3. A load 8 such as a general household appliance or the like is connected between the power conditioner 4 and the power grid 2 through a distribution board.
The distributed power supply 3 is a solar power generator, a wind power generator, a fuel cell battery, a cogeneration system, a storage battery or the like and is a power supply that outputs DC power. The distributed power supply 3 includes a storage battery and a generator mounted on a vehicle. The distributed power supply 3 outputs DC power to the power conditioner 4.

<Circuit Configuration of Power Conditioner 4>

The power conditioner 4 converts direct current (DC) power output from the distributed power supply 3 into alternating current (AC) power and supplies the converted AC power to the load 8 and the power grid 2. The power conditioner 4 is provided with a DC-to-DC converter 5, a power conversion device 6 and a switchgear 7.
The DC-to-DC converter 5 is a circuit that converts the voltage of the DC power output from the distributed power supply 3 into a predetermined voltage. The DC-to-DC converter 5 outputs the DC power with converted voltage to the power conversion device 6.

The power conversion device 6 is provided with a control circuit 60, an inverter (voltage conversion circuit) 61, a filter circuit 62, a current detection circuit 63 and a voltage detection circuit 64.

The switchgear 7 is a relay for connecting or disconnecting the distributed power supply 3 to or from the power grid 2. The opening or closing of the switchgear 7 is controlled by the control circuit 60. The distributed power supply 3 is in an interconnected state in the case where the switchgear 7 is switched to a conductive state (parallel state) and is in a disconnected state from the power grid 2 in the case where the switchgear 7 is switched to a non-conductive state (parallel-off state).

The inverter 61 is a circuit that converts DC power output from the DC-DC converter 5 into AC power in order to follow the fluctuations in the power grid 2 by system interconnection control. The inverter 61 outputs the converted AC power to the filter circuit 62.

The filter circuit 62 cuts the high-frequency component contained in the AC power output from the inverter 61 and outputs the cut component to the load 8 and the power grid 2. The filter circuit 62, for example, has an inductor 62a connected in series to the inverter 61 and a capacitor 62b connected in parallel to the inverter 61.

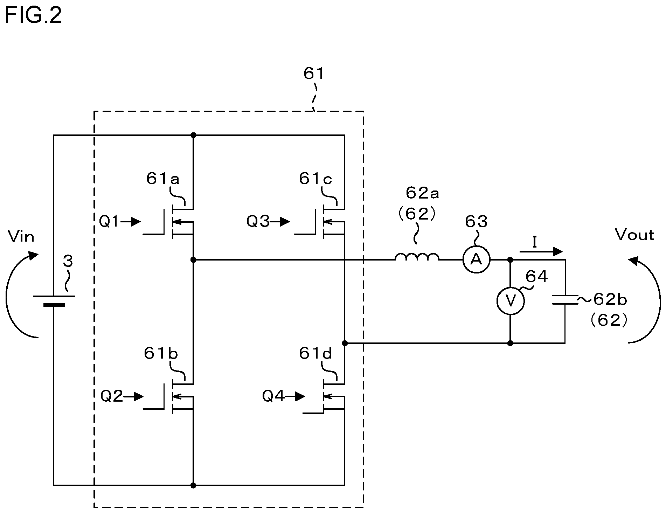

FIG. 2 is a circuit diagram illustrating the inverter 61 and its peripheral circuits. The inverter 61 is a full bridge circuit consisting of two legs connected in parallel. A first leg is a circuit consisting of a high-side switching element 61a and a low-side switching element 61b that are connected in series. Likewise, a second leg is a circuit consisting of a high-side switching element 61c and a low-side switching element 61d that are connected in series. The high-side switching elements 61a and 61c and the low-side switching elements 61b and 61d are N-channel MOSFETs (Metal Oxide Semiconductor Field Effect Transistors), for example. The high-side switching elements 61a, 61c and the low-side switching elements 61b and 61d are hereinafter collectively referred to as each switching element. The control circuit 60 performs PWM control on the on-off states of each switching element by outputting a PWM signal to the gate of each switching element. In particular, in the first embodiment, an example is described where the control circuit 60 performs PWM control on the on-off states of each switching elements according to a bipolar method.

At the middle point between the high-side switching element 61a and the low-side switching element 61b, one end of the inductor 62a is connected, and the other end of the inductor 62a is connected to one end of the capacitor 62b. The other end of the capacitor 62b is connected to the middle point between the high-side switching element 61c and the low-side switching element 61d.

The current detection circuit 63 is a current sensor that detects a current value of AC power output from the inverter 61 and outputs a current value signal indicating the detected current value to the control circuit 60. The control circuit 60 converts the current value signal output from the current detection circuit 63 to digital current value data and acquires the AD-converted current value data.

The voltage detection circuit 64 is a voltage sensor circuit that detects a voltage value of the AC power output from the inverter 61 and outputs a voltage value signal indicating the detected voltage value to the control circuit 60. The control circuit 60 converts the voltage value signal output from the voltage detection circuit 64 to digital voltage value data and acquires the AD-converted voltage value data.

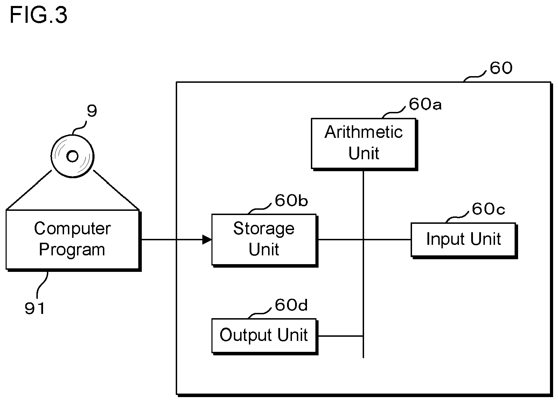

The control circuit 60 is a computer that controls the operation of the power conditioner 4. FIG. 3 is a block diagram illustrating an example of the configuration of the control circuit 60. The control circuit 60 is a computer and is provided with an arithmetic unit 60a, a storage unit 60b, an input unit 60c and an output unit 60d.

The storage unit 60b has a main storage and an auxiliary storage, for example. The main storage, which is a temporary storage region such as an SRAM (Static Random Access Memory), a DRAM (Dynamic Random Access Memory), a flash memory or the like, temporarily stores data necessary for the arithmetic unit 60a executing arithmetic computation processing. The auxiliary storage, which is a storage device such as EEPROM (Electrically Erasable Programmable ROM), stores a computer program 91 to be executed by the arithmetic unit 60a and various data necessary for other processing.

The computer program 91 may be written into the auxiliary storage at the manufacturing stage of the power conversion device 6, or may acquire a program, which is delivered by an external computer, by the power conditioner 4 through communication and store the program in the auxiliary storage. The computer program 91 may be readably recorded onto a recording medium 9 such as a magnetic disk, an optical disk or a semiconductor memory, or may be stored in the auxiliary storage unit through reading by a reading device from the recording medium 9.

The input unit 60c is a circuit that receives inputs of a current value signal and a voltage value signal output from the current detection circuit 63 and the voltage detection circuit 64, respectively. The input unit 60c has an analog-to-digital conversion circuit, for example, to convert the input current value signal into digital current value data. The input unit 60c also converts the input voltage value signal into digital voltage value data. The arithmetic unit 60a acquires the current value data and the voltage value data via the input unit 60c at a predetermined monitoring timing and stores the respective acquired data in the storage unit 60b.

The arithmetic unit 60a is an arithmetic circuit such as CPU (Central Processing Unit), an MPU (Micro Processing Unit) or the like. The arithmetic unit 60a executes the computer program 91 stored in the storage unit 60b to control the operation of each of the components. The arithmetic unit 60a controls the operation of the control circuit 60 by executing processing according to the computer program 91 to thereby calculate the average value of the output current with high accuracy and control the operation of the power conversion device 6. Though in the present embodiment, an example where the control circuit 60 realizes various functional parts in software is described, some or all of the various functional parts may be configured with dedicated hardware such as a semiconductor integrated circuit.

The output unit 60d outputs, to the inverter 61, a PWM signal for performing PWM control on the inverter 61 according to the control by the arithmetic unit 60a. In addition, the output unit 60d outputs a signal for opening and closing the switchgear 7 to the switchgear 7.

<Method of Calculating Output Average Current of Inverter 61>

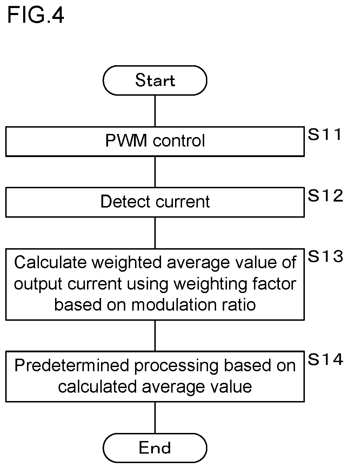

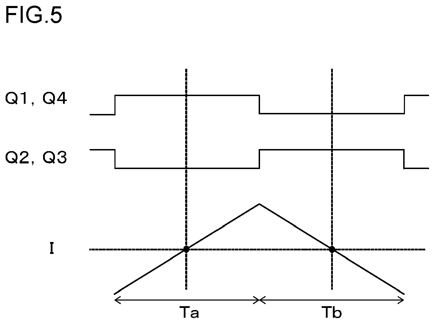

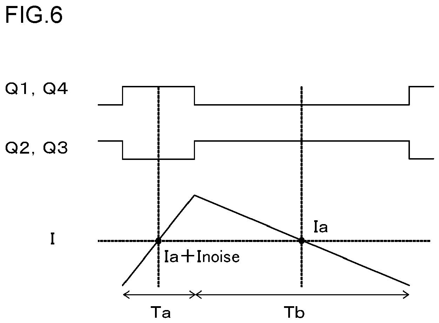

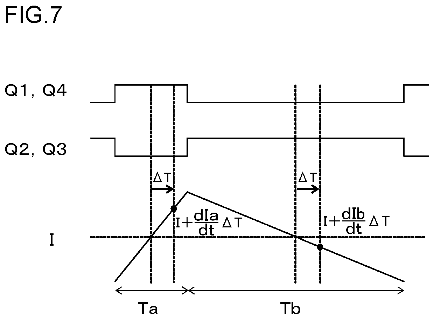

FIG. 4 is a flowchart illustrating a processing procedure of the control circuit 60. FIGs. 5 to 7 illustrate timing charts depicting a method of calculating average output current.

In FIGs. 5 to 7, the square wave at the top depicts the temporal variation of the on-off states of the high-side switching element 61a and the low-side switching element 61d, and the square wave at the middle depicts the temporal variation of the on-off states of the high-side switching element 61c and the low-side switching element 61b. The switching control illustrated in FIG. 5 to 7 employs an inverter system. The graph at the bottom depicts the temporal variation of the current output from the inverter 61. The black circles indicate the timing of detecting current, that is, the timing of acquiring current value data by the control circuit 60.

The control circuit 60 performs PWM control on the inverter 61 at a modulation ratio m depending on the state in order to convert the DC power output from the distributed power supply 3 into AC power (step S11). The modulation ratio m is the ratio of the output voltage (root-mean-square value) that is output from the inverter 61 to the input voltage that is input to the inverter 61. The modulation ratio is a value ranging from -1 to 1.

The control circuit 60 then detects the current output from the inverter 61 (step S12). The control circuit 60 acquires the current value data each time the full bridge circuit consisting of the inverter 61 is switched. Specifically, the control circuit 60 acquires current value data at the timings when the high-side switching element 61a and the low-side switching element 61d are in the on state and the off state. More specifically, as illustrated in FIG. 5, the control circuit 60 acquires current value data at the midpoint (Ta/2) of the on period Ta for the high-side switching element 61a and for the low-side switching element 61d. The state where the high-side switching element 61a and the low-side switching element 61d are on is a switching state (first switching state) where the output of current from the inverter 61 increases. In addition, the control circuit 60 acquires the current value data at the midpoint (Tb/2) of the off period Tb for the high-side switching element 61a and for the low-side switching element 61d. The off state where the high-side switching element 61a and the low-side switching element 61d are off is a switching state (second switching state) where the output of current from the inverter 61 decreases.

The control circuit 60 then calculates a weighted average value of the output current using a weighting factor based on the modulation ratio m related to the PWM control (step S13) and performs predetermined processing based on the calculated average value of the output current (step S14). The predetermined processing is, for example, processing to change the dead time of the PWM control.

Specifically, the control circuit 60 calculates the average value of the current output from the inverter 61 on the basis of the following Equation (1).

$$I = I_a \times (1 + m) / 2 + I_b \times (1 - m) / 2 \ldots (1)$$

$$m = \frac{V_{out}}{V_{in}}$$

where

I: average value of current output from the inverter 61
Ia: first current value (current value detected at the midpoint of the on period for the high-side switching elements 61a and 61c)
Ib: second current value (current value detected at the midpoint of the off period for the high-side switching elements 61a and 61c)
m: modulation ratio related to PWM control
$V_{in}$ : input voltage to the inverter 61
$V_{out}$ : output voltage from the inverter 61

The technical meaning of Equation (1) above is described.

If the modulation ratio m is small, the on-period Ta of the high-side switching element 61a and the low-side switching element 61d is shortened, making the measured point closer to the switching point. Switching noise occurs at the switching point and interacts with parasitic elements, which may cause ringing for a certain time period. Accordingly, as the measured point is closer to the switching point, effect of the switching noise is increased. Thus, the weighted average as expressed in Equation (1) described above makes the weight on the first current value Ia lower as the on-period Ta is shorter, which can suppress the influence of the noise. Likewise, when the off period Tb of the high-side switching element 61a and the low-side switching element 61d is short, the weight on the second current value Ib is low, which can suppress the influence of noise.

On the other hand, if the output current can be detected at the mid-point of the on-period Ta and at the mid-point of the off-period Tb, the first current value Ia and the second current value Ib are both the same as or close to the output average current value I. However, the measurement timing of the output current always involves errors. The measurement errors in the measurement timing include errors caused by performance and characteristics of the control circuit 60. When the time error in the measurement timing is $\Delta T$, the measured first current value Ia and second current value Ib are respectively expressed below by Equation (2) and Equation (3).

$$\mathrm{I}a = \mathrm{I} + \frac{dI_{La}}{dt}\Delta T \dots (2)$$

$$\mathrm{I}b = \mathrm{I} + \frac{dI_{Lb}}{dt}\Delta T \dots (3)$$

where

$$\begin{cases} \dfrac{dI_{La}}{dt} = \dfrac{V_{in} - V_{out}}{L} = \dfrac{(1-\mathrm{m})V_{in}}{L} \\ \dfrac{dI_{Lb}}{dt} = -\dfrac{V_{in} + V_{out}}{L} = -\dfrac{(1+\mathrm{m})V_{in}}{L} \end{cases}$$

L : inductance of the inductor 62a

Here, the average value of the first current value Ia and the second current value Ib are expressed below by Equation (4).

$$\frac{I_a + I_b}{2} = \mathrm{I} - \frac{V_{in}}{L}m\Delta T \dots (4)$$

where

$\Delta T$ : time error in measurement

The second term of Equation (4) above is an error term. As the modulation ratio m deviates from 0 and the time error $\Delta T$ is increased, the error term is greater.

As such, the use of the weighted average expressed by Equation (1) instead of the arithmetic mean can cancel out the error term.

According to the first embodiment, it is possible to suppress the influence of the measurement errors due to the mixing of switching noise and the time error in the detection timing in the power conversion device 6 and to calculate the average value of the output current values from the inverter 61 with high accuracy.

The average current of the inverter 61 is represented by variables of only the modulation ratio m, the first current value Ia and the second current value Ib, which eliminates the involvement of an error term related to the detection timing from the midpoint in the on and off periods of the switching elements. Accordingly, with only these three variables, the average current of the inverter 61 can accurately be calculated without being affected by the error in the detection timing.

The right side of Equation (1) described above consists of several current value variables, and setting the ratio (weight) of each of these variables determines the current average value. In other words, the modulation ratio m is an important parameter for determining the weight.

Though the unilateral DC-to-DC converter 5 and the inverter 61 are described in the present embodiment, the power conditioner 4 according to the present embodiment may be configured with a bilateral DC-to-DC converter 5 and the inverter 61.

Second Embodiment

The grid interconnection system 1 according to the second embodiment is different from that of the first embodiment in the control circuit 60 performing PWM control on the on-off states of each switching element with a unipolar method and in the method of calculating an output average current of the inverter 61. Since the other configurations of the grid interconnection system 1 are the same as those of the first embodiment, similar parts are denoted by similar reference codes and detailed description thereof will not be repeated.

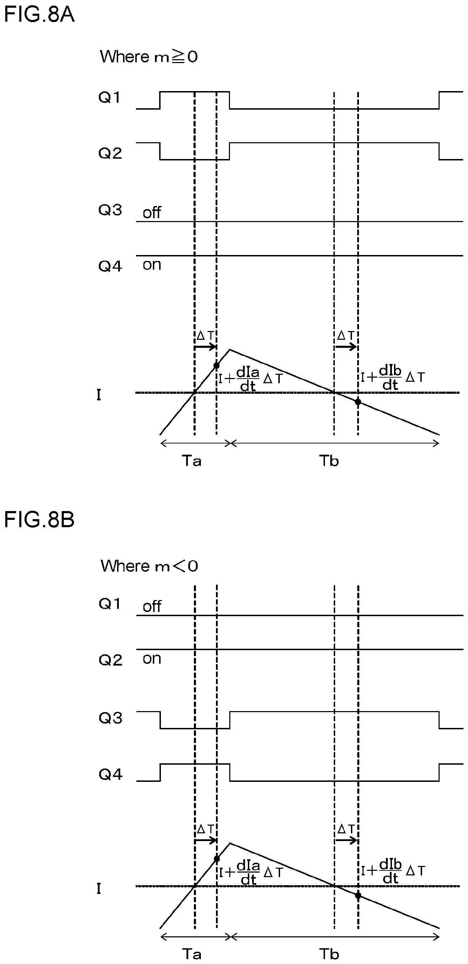

FIG. 8A and FIG. 8B illustrate timing charts depicting a method of calculating average output current according to the second embodiment. FIG. 8A depicts switching control of the unipolar method in the case where the modulation ratio is equal to or higher than 0 while FIG. 8B depicts switching control of the unipolar method in the case where the modulation ratio is lower than 0. In FIG. 8A and FIG. 8B, the time variation of the on-off states of the high-side switching element 61a, the low-side switching element 61b, the high-side switching element 61c and the low-side switching element 61d are depicted from the top in order. At the bottom, the time variation of the current output from the inverter 61 and the timing of acquiring the current value data are depicted as in the first embodiment.

The control circuit 60 according to the second embodiment performs PWM control on the switching elements with the unipolar method and measures the current output from the inverter 61 as in the first embodiment.

In the case where the modulation ratio is equal to or higher than 0, the control circuit 60 controls the high-side switching element 61c to the off state and the low-side switching element 61d to the on state, and acquires current value data at the timings when the high-side switching element 61a is in the on state (the low-side switching element 61b is in the off state) and in the off state. More specifically, as illustrated in FIG. 8A, the control circuit 60 acquires the current value data at the midpoint (Ta/2) of the on period Ta for the high-side switching element 61a. The state where the high-side switching element 61a is on and the low-side switching element 61b is off is a switching state (first switching state) where the output of current from the inverter 61 increases. In addition, the control circuit 60 acquires the current value data at the midpoint (Tb/2) of the off period Tb for the high-side switching element 61a. The state where the high-side switching element 61a is off and the low-side switching element 61b is on is a switching state (second switching state) where the output of current from the inverter 61 decreases.

In the case where the modulation ratio is lower than 0, the control circuit 60 controls the high-side switching element 61a to the off state and the low-side switching element 61b to the on state, and acquires current value data at the timings when the high-side switching element 61c is in the on state (the low-side switching element 61d is in the off state) and in the off state. More specifically, as illustrated in FIG. 8B, the control circuit 60 acquires the current value data at the midpoint (Ta/2) of the off period Ta for the high-side switching element 61c. The state where the high-side switching element 61c is off and the low-side switching element 61c is on is a switching state (first switching state) where the output of current from the inverter 61 increases. In addition, the control circuit 60 acquires the current value data at the midpoint (Tb/2) of the on period Tb for the high-side switching element 61c. The state where the high-side switching element 61c is on and the low-side switching element 61d is off is a switching state (second switching state) where the output of current from the inverter 61 decreases.

The control circuit 60 then calculates a weighted average value of the output current using a weighting factor based on the modulation ratio m related to the PWM control. Specifically, the control circuit 60 calculates the average value of the current output from the inverter 61 on the basis of Equation (5) below in the case where the modulation ratio is equal to or higher than 0.

$$I = m \times Ia + (1 - m) \times Ib \dots (5)$$

where

I: average value of current output from the inverter 61
Ia: first current value (current value detected in the first switching state)
Ib: second current value (current value detected in the second switching state)
m: modulation ratio related to PWM control

The control circuit 60 calculates the average value of the current output from the inverter 61 on the basis of Equation (6) below in the case where the modulation ratio is lower than 0.

$$I = (m + 1) \times Ia - m \times Ib \dots (6)$$

where

I: average value of current output from the inverter 61
Ia: first current value (current value detected in the first switching state)
Ib: second current value (current value detected in the second switching state)
m: modulation ratio related to PWM control

According to the second embodiment, it is possible to suppress the influence of the measurement errors due to the mixing of switching noise and the time error in the detection timing in the power conversion device 6 controlled with the unipolar method and calculate the average value of the output current values from the inverter 61 with high accuracy, as in the first embodiment.

Third Embodiment

The grid interconnection system 1 according to the third embodiment is different from that of the first embodiment in the control circuit 60 performing PWM control on the on-off states of each switching element with a totem pole method and with the method of calculating an output average current of the inverter 61. Since the other configurations of the grid interconnection system 1 are the same as those of the first embodiment, similar parts are denoted by similar reference codes and detailed description thereof will not be repeated.

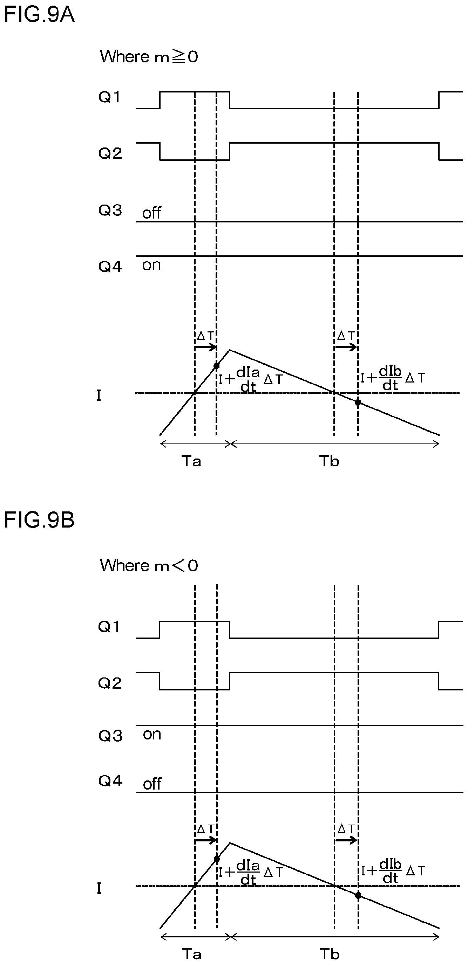

FIG. 9A and FIG. 9B illustrate timing charts depicting a method of calculating average output current according to the third embodiment. FIG. 9A depicts switching control with the totem pole method in the case where the modulation ratio is equal to or higher than 0 while FIG. 9B depicts switching control with the totem pole method in the case where the modulation ratio is lower than 0. In FIG. 9A and FIG. 9B, the time variation of the on-off states of the high-side switching element 61a, the low-side switching element 61b, the high-side switching element 61c and the low-side switching element 61d are depicted from the top in order. At the bottom, the time variation of the current output from the inverter 61 and the timing of acquiring the current value data are depicted as in the first embodiment.

The control circuit 60 according to the third embodiment performs PWM control on the switching elements with the totem pole method and measures the current output from the inverter 61 as in the first embodiment.

In the case where the modulation ratio is equal to or higher than 0, the control circuit 60 controls the high-side switching element 61c to the off state and the low-side switching element 61d to the on state, and acquires current value data at the timings when the high-side switching element 61a is in the on state (the low-side switching element 61b is in the off state) and in the off state. More specifically, as illustrated in FIG. 9A, the control circuit 60 acquires the current value data at the midpoint (Ta/2) of the on period Ta for the high-side switching element 61a. The state where the high-side switching element 61a is on and the low-side switching element 61b is off is a switching state (first switching state) where the output of current from the inverter 61 increases. In addition, the control circuit 60 acquires the current value data at the midpoint (Tb/2) of the off period Tb for the high-side switching element 61a. The state where the high-side switching element 61a is off and the low-side switching element 61b is on is a switching state (second switching state) where the output of current from the inverter 61 decreases.

In the case where the modulation ratio is lower than 0, the control circuit 60 controls the high-side switching element 61c to the on state and the low-side switching element 61d to the off state, and acquires current value data at the timings when the high-side switching element 61a is in the on state (the low-side switching element 61b is in the off state) and in the off state. More specifically, as illustrated in FIG. 9B, the control circuit 60 acquires the current value data at the midpoint (Ta/2) of the on period Ta for the high-side switching element 61a. The state where the high-side switching element 61a is on and the low-side switching element 61b is off is a switching state (first switching state) where the output of current from the inverter 61 increases. In addition, the control circuit 60 acquires the current value data at the midpoint (Tb/2) of the off period Tb for the high-side switching element 61a. The state where the high-side switching element 61a is off and the low-side switching element 61b is on is a switching state (second switching state) where the output of current from the inverter 61 decreases.

The control circuit 60 then calculates a weighted average value of the output current using a weighting factor based on the modulation ratio m related to the PWM control. Specifically, the control circuit 60 calculates the average value of the current output from the inverter 61 on the basis of Equation (5) above in the case where the modulation ratio is equal to or higher than 0 as in the second embodiment. The control circuit 60 calculates the average current output from the inverter 61 on the basis of Equation (6) above in the case where the modulation ratio is equal to or higher than 0.

According to the third embodiment as described above, it is possible to suppress the influence of the measurement errors due to the mixing of switching noise and the time error in the detection timing in the power conversion device 6 controlled with the totem pole method and calculate the average value of the output current values from the inverter 61 with high accuracy, as in the first embodiment.

Fourth Embodiment

The grid interconnection system 1 according to the fourth embodiment is different from that of the first embodiment in that the power conversion device 6 has a step-down chopper circuit in place of the inverter 61 and the filter circuit 62 and that the control circuit 60 calculates an output average current of the step-down chopper circuit. Since the other configurations of the grid interconnection system 1 are the same as those of the first embodiment, similar parts are denoted by similar reference codes and detailed description thereof will not be repeated.

The step-down chopper circuit is provided with a switching element, an inductor, a diode and a capacitor. The switching element and the inductor are connected in series from the high potential side to the low potential side. The cathode of the diode is connected to the contact point between the switching element and the inductor while the anode thereof is grounded. The capacitor is connected in parallel on the low potential side.

The control circuit 60 according to the fourth embodiment performs switching control on the step-down chopper circuit and acquires current value data at timings when the switching element of the step-down chopper circuit is in the on state and in the off state. More specifically, the control circuit 60 acquires the current value data at the midpoint of the on period and at the midpoint of the off period. Note that the on state of the switching element is a switching state (first switching state) where the output of current from the step-down chopper circuit increases, while the off state of the switching element is a switching state (second switching state) where the output of current from the step-down chopper circuit decreases.

The control circuit 60 then calculates the weighted average value of the output current using a weighting factor based on a step-down ratio $\alpha$. The step-down ratio $\alpha$ is a type of the modulation ratio. Specifically, the control circuit 60 performs computation on the basis of Equation (7) below.

$$\mathrm{I} = \alpha \times \mathrm{I} \, \mathrm{a} + (1 - \alpha) \times \mathrm{I} \, \mathrm{b} \dots (7)$$

$$\alpha = \frac{V_{out}}{V_{in}}$$

where

I: average value of current output from the step-down chopper circuit
Ia: first current value (current value detected in the first switching state)
Ib: second current value (current value detected in the second switching state)
$\alpha$ : step-down ratio
$V_{in}$ : input voltage to the step-down chopper circuit
$V_{out}$ : output voltage from step-down chopper circuit

According to the fourth embodiment, it is possible to suppress the influence of the measurement errors due to the mixing of switching noise and the time error in the detection timing in the power conversion device 6 and calculate the average value of the output current values from the step-down chopper circuit with high accuracy.

Fifth Embodiment

The grid interconnection system 1 according to the fifth embodiment is different from that of the first embodiment in that the power conversion device 6 has a step-up chopper circuit in place of the inverter 61 and the filter circuit 62, and that the control circuit 60 calculates output average current from the step-up chopper circuit. Since the other configurations of the grid interconnection system 1 are the same as those of the first embodiment, similar parts are denoted by similar reference codes and detailed description thereof will not be repeated.

The step-up chopper circuit is provided with a switching element, an inductor, a diode and a capacitor. The inductor and the diode are connected in series from the high potential side to the low potential side. One end of the switching element is connected to the contact point where the inductor and the diode are connected while the other end of the switching element is grounded. The capacitor is connected in parallel on the low potential side.

The control circuit 60 according to the fifth embodiment performs switching control on the step-up chopper circuit and acquires current value data at timings when the switching element of the step-up chopper circuit is in the on state and in the off state. More specifically, the control circuit 60 acquires the current value data at the midpoint of the on period and at the midpoint of the off period. Note that the on state of the switching element is a switching state (first switching state) where the output of current from the step-up chopper circuit increases while the off state of the switching element is a switching state (second switching state) where the output of current from the step-up chopper circuit decreases.

The control circuit 60 then calculates the weighted average value of the output current using a weighting factor based on a step-up ratio $\alpha$. The step-up ratio $\alpha$ is a type of the modulation ratio. Specifically, the control circuit 60 performs computation on the basis of Equation (8) below.

$$I = (\alpha - 1) / \alpha \times Ia + 1 / \alpha \times Ib \dots (8)$$

$$\alpha = \frac{V_{out}}{V_{in}}$$

where

I: average value of current output from the step-up chopper circuit
Ia: first current value (current value detected in the first switching state)
Ib: second current value (current value detected in the second switching state)
$\alpha$ : step-up ratio
$V_{in}$ : input voltage to the step-up chopper circuit
$V_{out}$ : output voltage from step-up chopper circuit

According to the fifth embodiment as described above, it is possible to suppress the influence of the measurement errors due to the mixing of switching noise and the time error in the detection timing in the power conversion device 6 and calculate the average value of the output current values from the step-up chopper circuit with high accuracy.

[Description of Reference Numerals]

| | |
|---|---|
| 1 | grid interconnection system |
| 2 | power grid |
| 3 | distributed power supply |
| 4 | power conditioner |
| 5 | DC-to-DC converter |
| 6 | power conversion device |
| 7 | switchgear |
| 8 | load |
| 9 | recording medium |
| 60 | control circuit |
| 61 | inverter |
| 62 | filter circuit |
| 62a | inductor |
| 62b | capacitor |
| 63 | current detection circuit |
| 64 | voltage detection circuit |
| 91 | computer program |

**Claims**

**1.** A power conversion device (6) comprising:

a voltage conversion circuit (61) having a switching element;
a control circuit (60) performing switching control of the voltage conversion circuit (61); and
a current detection circuit (63) detecting current output from the voltage conversion circuit (61),
wherein
the control circuit (60)
calculates an average value of current output from the voltage conversion circuit (61) based on a first current value detected in a first switching state where output of current increases, a second current value detected in a second switching state where output of current decreases and a modulation ratio related to switching control of voltage conversion, and

controls operation of the voltage conversion circuit (61) based on a calculated average value.

2. The power conversion device (6) according to claim 1, wherein the control circuit (60) calculates a weighted average of the first current value and the second current value using a weighting factor based on the modulation ratio.

3. The power conversion device (6) according to claim 1 or 2, wherein

the voltage conversion circuit (61) is an inverter having a circuit configured with two switching elements (61a,61b, 61c, 61d) connected in series,
the control circuit (60) is adapted to perform PWM control on the voltage conversion circuit (61) with a bipolar method, and calculates an average value of current output from the voltage conversion circuit (61) based on an equation as follows:

$$I=Ia\times(1+m)/2+Ib\times(1-m)/2,$$

where

I: an average value of current output from the voltage conversion circuit (61)
Ia: the first current value
Ib: the second current value
m: the modulation ratio.

4. The power conversion device (6) according to claim 1 or 2, wherein

the voltage conversion circuit (61) is an inverter having a circuit configured with two switching elements (61a,61b, 61c, 61d) connected in series,
the control circuit (60) is adapted to perform PWM control on the voltage conversion circuit (61) with a unipolar method or a totem pole method, and calculates an average value of current output from the voltage conversion circuit (61) based on equations as follows:

$$I=m\times Ia+(1-m)\times Ib \text{ (if } m\geq0);$$

and

$$I=(m+1)\times Ia-m\times Ib \text{ (if } m<0),$$

where

I: an average value of current output from the voltage conversion circuit (61)
Ia: the first current value
Ib: the second current value
m: the modulation ratio.

5. A power conversion method using a voltage conversion circuit (61) having a switching element, comprising:

performing switching control of the voltage conversion circuit (61);
detecting current output from the voltage conversion circuit (61);
calculating an average value of current output from the voltage conversion circuit (61) based on a first current value detected in a first switching state where output of current increases, a second current value detected in a second switching state where output of current decreases and a modulation ratio related to switching control of voltage conversion; and
controlling operation of the voltage conversion circuit (61) based on a calculated average value.

6. A computer program causing a computer to execute processing related to power conversion using a voltage conversion circuit (61) having a switching element of:

performing switching control of the voltage conversion circuit (61);

detecting current output from the voltage conversion circuit (61);

calculating an average value of current output from the voltage conversion circuit (61) based on a first current value detected in a first switching state where output of current increases, a second current value detected in a second switching state where output of current decreases and a modulation ratio related to switching control of voltage conversion; and

controlling operation of the voltage conversion circuit (61) based on a calculated average value.

FIG.1

FIG.2

FIG.3

FIG.4

```
                    ╭─────────────╮
                    │    Start     │
                    ╰─────────────╯
                           │
        ┌──────────────────────────────────┐
        │          PWM control              │ S11
        └──────────────────────────────────┘
                           │
        ┌──────────────────────────────────┐
        │          Detect current           │ S12
        └──────────────────────────────────┘
                           │
        ┌──────────────────────────────────┐
        │ Calculate weighted average value of│ S13
        │ output current using weighting factor│
        │    based on modulation ratio       │
        └──────────────────────────────────┘
                           │
        ┌──────────────────────────────────┐
        │ Predetermined processing based on │ S14
        │      calculated average value      │
        └──────────────────────────────────┘
                           │
                    ╭─────────────╮
                    │     End      │
                    ╰─────────────╯
```

FIG.5

FIG.6

FIG.7

FIG.8A

Where m ≧ 0

Q1

Q2

Q3  off

Q4  on

ΔT

ΔT

$I + \dfrac{dIa}{dt}\,\Delta T$

$I + \dfrac{dIb}{dt}\,\Delta T$

I

Ta

Tb

FIG.8B

Where m ＜ 0

Q1  off

Q2  on

Q3

Q4

ΔT

ΔT

$I + \dfrac{dIa}{dt}\,\Delta T$

$I + \dfrac{dIb}{dt}\,\Delta T$

I

Ta

Tb

## FIG.9A

Where $m \geqq 0$

## FIG.9B

Where $m < 0$

Europäisches
Patentamt

European
Patent Office

Office européen
des brevets

# EUROPEAN SEARCH REPORT

**Application Number**

EP 24 19 3654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/007323 A1 (TSUJII SHINTARO [JP] ET AL) 14 January 2010 (2010-01-14) | 1,2,5,6 | INV.<br>H02M1/00 |
| A | * paragraph [0043] - paragraph [0075] *<br>* figures 1,3,4 * | 3,4 | H02M3/158<br>H02M7/5387 |
| | - - - - - | | |
| A | US 2010/109592 A1 (LI JIANG [GB])<br>6 May 2010 (2010-05-06)<br>* paragraph [0008] - paragraph [0052] *<br>* figure 5 * | 1-6 | |
| | - - - - - | | |

**TECHNICAL FIELDS SEARCHED (IPC)**

H02M

The present search report has been drawn up for all claims

| Place of search | Date of completion of the search | Examiner |
|---|---|---|
| The Hague | 12 December 2024 | Lochhead, Steven |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

     .......................................................................
& : member of the same patent family, corresponding
   document

EPO FORM 1503 03.82 (P04C01)

**ANNEX TO THE EUROPEAN SEARCH REPORT**
**ON EUROPEAN PATENT APPLICATION NO.**                    EP 24 19 3654

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | Publication date | Patent family member(s) | | Publication date |
|---|---|---|---|---|
| US 2010007323 A1 | 14-01-2010 | JP | 4471024 B2 | 02-06-2010 |
| | | JP | 2010022170 A | 28-01-2010 |
| | | US | 2010007323 A1 | 14-01-2010 |
| US 2010109592 A1 | 06-05-2010 | DE | 112008000522 T5 | 04-02-2010 |
| | | GB | 2460192 A | 25-11-2009 |
| | | US | 2010109592 A1 | 06-05-2010 |
| | | WO | 2008110817 A2 | 18-09-2008 |

EPO FORM P0459

For more details about this annex : see Official Journal of the European Patent Office, No. 12/82

**EP 4 510 433 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S58190281 A
- JP 2014060851 A